# EUROPEAN PATENT APPLICATION

(11) **EP 2 498 483 A1**
(43) Date of publication of application: **12.09.2012**
(21) Application number: 11182158.3
(22) Date of filing: 21.09.2011
(51) Int. Cl.: H04M 3/42

(54) **Trigger events for unified communications**

(30) Priority: 09.03.2011 US 932942
(71) Applicant: Mitel Networks Corporation, Ottawa, ON K2K 2W7 (CA)
(72) Inventor: Soundrapandian, Suriyaprakash, Chandler, AZ Arizona 85286 (US); Midtun, James, Chandler, AZ Arizona 85249 (US)
(74) Representative: Venner Shipley LLP

(57) **Abstract**

The present application relates to unified communications, and more specifically, to resolving status conflicts within unified communications to provide integrated services. According to one illustrative embodiment, a set of status triggers are managed through a unified communication server. The triggers can be received from client devices such as global positioning systems, computers, presence detectors, calendar applications, etc. When received, the unified communication server can associate each of the triggers with a priority along with a duration. The unified communication server can set a status for the user according to the duration of the trigger event having the highest priority or until another trigger event having a higher priority is received. Based on the status of the user, communication services can be updated or kept.

## Description

This application generally relates to trigger events and particularly, although not exclusively, to integrated communication services, and more particularly, to resolving status conflicts within unified communications to provide integrated services.

Every day, millions of people log in to their computers using an associated password and username. By logging in and using such personalized information, the status of the person at a computer terminal can be determined. In addition, motion sensor systems, through infrared technology, can determine the presence or absence of a person by detecting movements within a limited range. Global positioning systems (GPS), often provided in many cell phones, can also be used to determine the location of a person. Other mechanisms or triggers for determining information about the person can include, but are not limited to, manual status changes by the person, manual status changes by an administrator, integrated calendar events, location based events, network connection based events, time based events and PC activity events. Unified communication systems can process this information as well as other data and form useable status information.

Current unified communication systems often allow for the creation and management of user statuses or profiles. These statuses can define the user's communication behaviour as it relates to such things as call routing, instant messaging availability, email, video, etc. These systems often rely on varying mechanisms presented above to trigger a user's status to change. Since these mechanisms are independent of each other and many of them are automated, situations can arise where user statuses continually override each other resulting in a "looping" situation. For example, a user can have a time based setting instructing the unified communication system to put them into status 'A' between the hours of 8:00 AM and 5:00 PM as well as a location based setting instructing them to set them to status 'B' when the location detection mechanism recognizes them in a specific location that could occur during those same hours. The problem then arises as to what status takes priority and for how long. One can imagine several of these situations based on the above mechanisms.

To overcome this, unified communication systems have used only one type of trigger at a time or put logic into systems allowing them to send one type of status trigger. Nevertheless, this does not prevent multiple systems or devices from overriding each other. A need therefore exists to provide a system for managing incoming triggers and resolving status conflicts generated between the triggers as well as overcoming other limitations present.

The novel features believed to be characteristic of the application are set forth in the appended claims. In the descriptions that follow, like parts are marked throughout the specification and drawings with the same numerals, respectively. The drawing figures are not necessarily drawn to scale and certain figures can be shown in exaggerated or generalized form in the interest of clarity and conciseness. The application itself, however, as well as a preferred mode of use, further objectives and advantages thereof, will be best understood by reference to the following detailed description of illustrative embodiments when read in conjunction with the accompanying drawings, wherein:
Figure 1 depicts a block diagram representing exemplary trigger events for determining a user's status to provide communication services in accordance with one aspect of the present application;
Figure 2A is a block diagram representing the exemplary trigger events with source tagging and source affinity in accordance with one aspect of the present application;
Figure 2B provides an illustrative table listing the exemplary trigger events in accordance with one aspect of the present application;
Figure 3 provides a flow chart depicting illustrative processes for handling status conflicts based on priority in accordance with one aspect of the present application;
Figure 4 shows a time based affinity example for handling trigger events in accordance with one aspect of the present application; and
Figure 5 shows a priority lowering example for handling trigger events in accordance with one aspect of the present application.

The description set forth below in connection with the appended drawings is intended as a description of presently preferred embodiments of the application and is not intended to represent the only forms in which the present application can be constructed and/or utilized. The description sets forth the functions and the sequence of steps for constructing and operating the application in connection with the illustrated embodiments. It is to be understood, however, that the same or equivalent functions and sequences can be accomplished by different embodiments that are also intended to be encompassed within the scope of this application.

Generally described, the present application relates to unified communications, and more specifically, to resolving status conflicts within unified communications to provide integrated services. According to one illustrative embodiment, a set of trigger events are managed through a unified communication server. The triggers can be received from client devices such as global positioning systems, computers, presence detectors, calendar applications, etc. When received, the unified communication server can associate each of the trigger events with a priority and a duration. The unified communication server can set a status for the user according to the duration of the trigger event having the highest priority or until another status trigger having a higher priority is received. Based on the determined status of the user, communication services can be provided.

Numerous advantages can be realized through the unified communication server as illustrated above. The server can resolve conflicts received through automatic or manual status updates provided for different reasons that often override each other or get the user into an undesired status setting. Applications or other programs can be further developed using information processed by the unified communication server. Many additional features and elements of the present application will become apparent to those of ordinary skill in the relevant art as provided for in the following description.

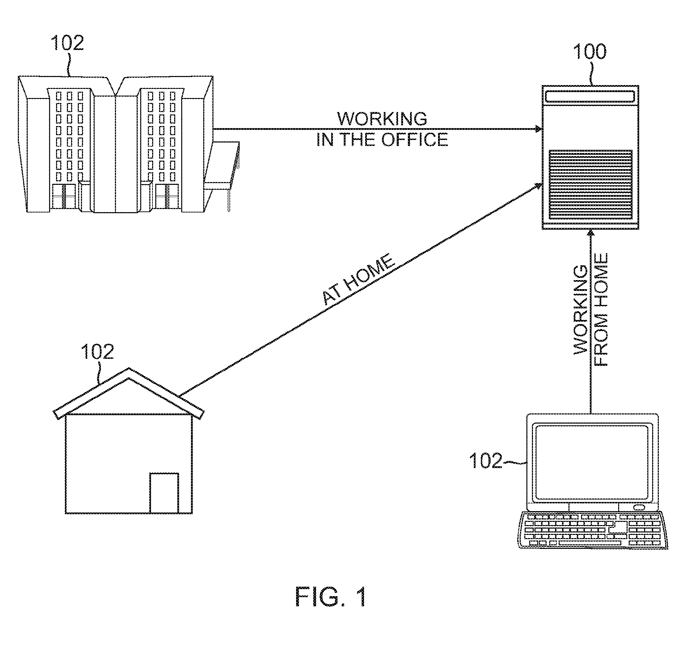

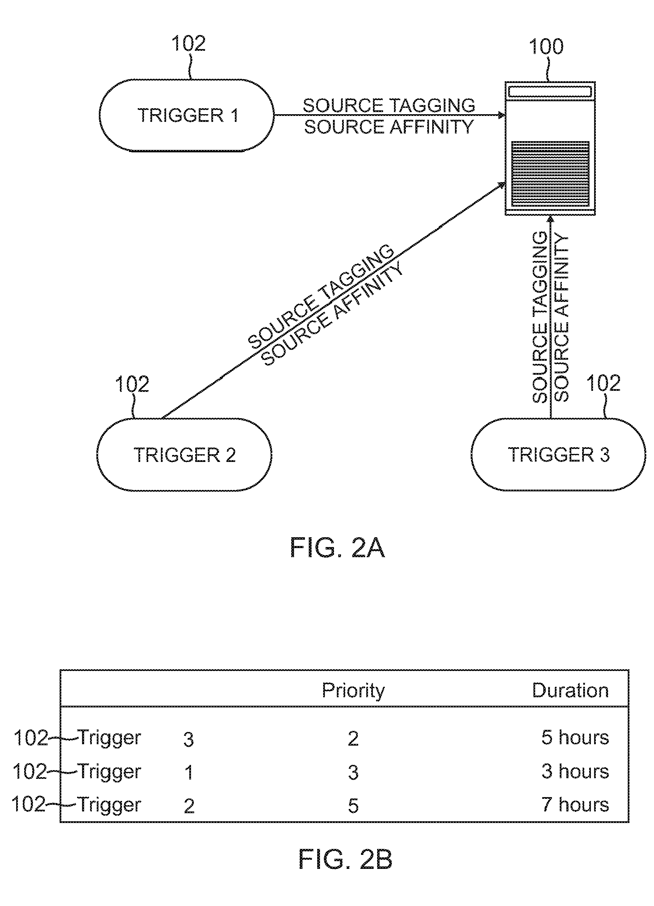

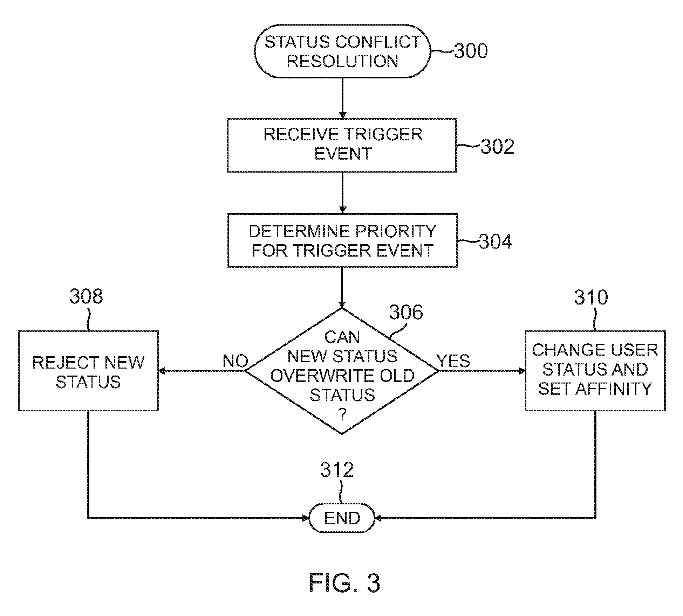

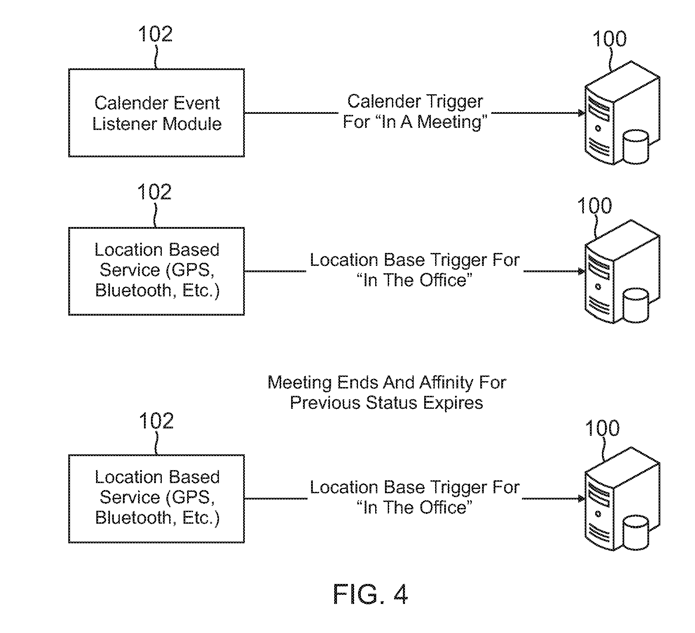

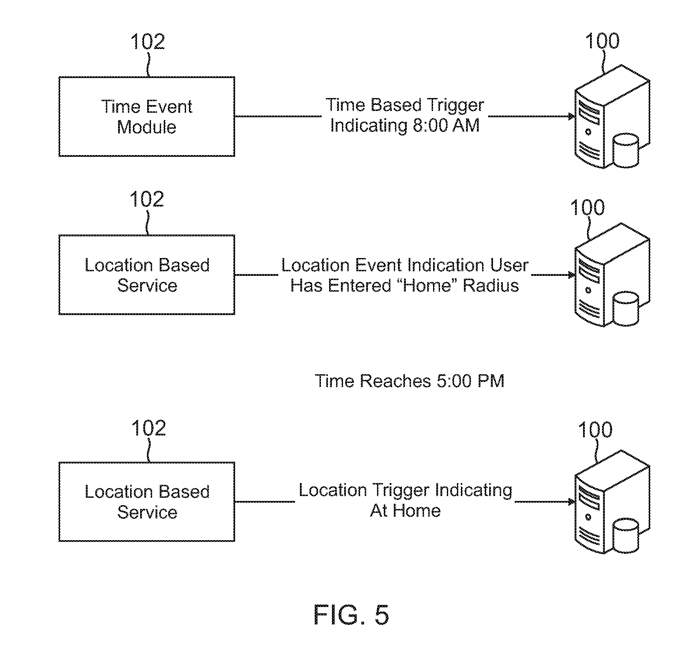

Before describing embodiments of the present application, an exemplary environment for receiving and processing trigger events will be described in Figure 1. Following, Figures 2A and 2B describe source tagging and source affinity for handling conflict resolution and Figure 3 provides a flow chart for handling the triggered events. Figures 4 and 5 provide examples for conflict resolution.

Turning now to Figure 1, a block diagram representing different trigger events 102 for determining a user's status in accordance with one aspect of the present application is provided. Trigger events 102, as referred to herein, can also be called event triggers, triggers or status triggers. As depicted, trigger events 102 can be provided to the unified communication system 100. The unified communication system 100 can solve status change conflicts by providing server side prioritization for multiple client support. Expiration times can be provided by the unified communication system 100 for status priority level lock.

The unified communication system 100 can provide real-time communication services. Unified communications can encompass a single product, but typically refers to a set of products that can provide a consistent unified user interface and user experience across multiple clients and media types. For example, a business application can simplify and integrate the trigger events to optimize business processes and reduce response time, manage flows and eliminate device and media dependencies. Services provided by unified communication systems 100 can include, but are not limited to, instant messaging, presence information, telephony, video conferencing and call control.

Continuing with Figure 1, trigger events 102 can be provided from a number of sources. In some embodiments, a trigger event 102 can indicate that the user is working in their office, indicated in the upper left corner. A time-based application can provide the trigger event 102, for example, a calendar application operating on top of the user's desktop computer. Presence detectors, card swipes as well as other methods for providing the trigger event 102 can be used. After the event is triggered, the trigger event 102 can be provided to the unified communication system 100 and processed.

Trigger events 102 can also be provided when the user reaches their home as shown in the bottom left. Common within today's mobile devices, global positioning systems can be used to track a location of the user. The global positioning system can indicate that the user has returned home. Those skilled in the relevant art will appreciate that other devices can be used to indicate the location of the user and are not limited to global positioning systems. For example, a trigger event 102 can also be provided when the user connects their laptop to their home workstation as shown in the bottom right. This can indicate that they are working from home or at least have their computer docked at home.

For purposes of illustration, when a trigger event 102 is received, the unified communication system 100 can set a time-based status at a high priority so that when the user is at home between 8:00 AM and 5:00 PM, the location and network connection triggers 102 do not override it. Once the time-based source expires, the user can remain in the "At Work" status indicating that they are in the office working late, but the network connectivity or location-based sources now have a higher priority so that when the user arrives at home, the status is set appropriately.

The processes shown above can work until the user decides to connect to WiFi at home on a weekend or at night and does not wish for the status to change. Currently, methods do not incorporate situations having ambiguity that cannot be resolved. The situation where a user chooses to work at home or "telecommute" often leads to the situation described above. In these scenarios, a user typically needs a system and method that can help differentiate "Working At Home" from "Gone For The Day" type statuses. As described below, the unified communication system 100 can solve these issues as well as provide additional related advantages.

While represented as a single server, the unified communication system 100 can include one or more computing systems and is not limited to a single entity. Typically, the processing can be performed on a server having a processing unit, system memory, and system bus that operatively couples various system components. The system memory can include read only memory and random access memory. A hard disk drive, magnetic disk drive, and optical disk drive can be connected to the system bus by a hard disk drive interface, a magnetic disk drive interface, and an optical disk drive interface, respectively. The drives and their associated computer-readable medium provide nonvolatile storage of computer-readable instructions and data structures.

The unified communication system 100 can operate in a networked environment using logical connections to one or more remote computers, for example, over a wireless network. These logical connections can be achieved by a communication device coupled to or integral with the system 100. The trigger events 102 can be provided by a computer, a server, a router, a network personal computer, a client, a peer device, or other common network node, and typically includes many or all of the elements described above. Unified communication system 100 can be logically connected to the Internet.

The technology described herein can be implemented as logical operations and/or modules in one or more systems. The logical operations can be implemented as a sequence of processor-implemented steps executing in one or more computer systems and as interconnected machine or circuit modules within one or more computer systems. Likewise, the descriptions of various component modules can be provided in terms of operations executed or effected by the modules. The resulting implementation is a matter of choice, dependent on the performance requirements of the underlying system implementing the described technology. Accordingly, the logical operations making up the embodiment of the technology described herein are referred to variously as operations, steps, objects, or modules. Furthermore, it should be understood that logical operations can be performed in any order, unless explicitly claimed otherwise or a specific order is inherently necessitated by the claim language.

As depicted in Figure 2A, the unified communication system 100 can associate source tagging and source affinity with trigger events 102 for status conflict resolution. Source tagging refers to assigning a priority for the trigger event 102. When a status change is requested, the source of the trigger event 102 can also be stored along with the status. The source can be a user defined source or alternatively, a system defined source. In one example, a user defined source can be a calendar application that provides trigger events 102 and a system defined source can be a global positioning system.

The source of the trigger event 102 can be sent from the client to the unified communication system 100 so that it can be stored on a database. When the status is set, and the source of the status is saved, typically a priority can be associated with that source. In some embodiments, the priority can be defined and sent from the client. The priority can also be pulled from a table stored on a database of the system 100. The table can store a list of common sources and their defined priorities. The priority provided by the source tagging can be used for creating a hierarchy of trigger events 102 received from the clients. For example, when an attempt comes from a client to set a status of a source with a lower priority, a rejection response can be sent back to the client indicating the error. Users can automate their status settings in such a manner as to not incur undesired status changes.

After the status change occurs and the priority is noted with the trigger event 102, source affinity can be used for determining how long or until what condition the status either is no longer valid or until the priority lowers automatically. The term "affinity" for a source is not necessarily restricted to time. Some affinities can require client connectivity, for example proximity and network connectivity. Time based affinities can include, but are not limited to, calendar events and time based status change. Connectivity based affinities can include network connection based status changes and proximity based affinities can include location based status changes. For connectivity based affinities, the status change can occur after connection is lost while in proximity based affinities, status change can occur after a certain distance is reached. By providing users the capability for specifying an affinity on their status update automation, status source tagging and preferences for overriding, users can automate their needs deterministically.

Figure 2B provides an illustrative table listing the trigger events 102 in accordance with one aspect of the present application. After receiving the trigger events 102, the source tagging can associate the trigger events 102 with a priority and duration. For purposes of illustration, Trigger 3 102 can be assigned with a priority of two and a duration of five hours, Trigger 1 102 can have a priority of three and a duration of three hours and Trigger 2 102 can be assigned a priority of five and a duration of seven hours. As shown within the table, the triggers 102 have been sorted by priority.

In some embodiments, when the duration of five hours for Trigger 3 102 expires, two hours will remain for Trigger 2 102 while the duration for Trigger 1 102 will expire within the five hours for Trigger 3 102. If there are no other additional triggers 102, Trigger 2 102 can be used to determine a user's status as two hours will remain for its duration. Generally, Trigger 1 102 can be deleted as the duration for the trigger 102 will have expired. In some embodiments, Trigger 1 102 is not deleted and can be used when Trigger 2 102 expires. For example, when Trigger 1 102 expires, the priority for Trigger 1 102 can be lowered. If Trigger 3 102 and Trigger 2 102 expire, Trigger 1 102 can be used to determine the status of the user even though the duration has expired for Trigger 1 102.

In some embodiments, the priority and duration of the trigger events 102 can be lowered and raised. For example, the priority for Trigger 1 102 can be raised after the duration expires such that the priority for Trigger 1 102 would be greater than Trigger 3 102 after three hours. While primarily described as working with time durations, those skilled in the relevant art will appreciate that other types of source affinities can be used. Furthermore, these source affinities can be interchanged and used together, for example, a time based affinity with a connectivity based affinity can be used. In addition, more than one type of affinity can be assigned with a trigger event 102. Those processes used for the trigger events 102 can be generally applied and do not necessarily relate to Trigger 1 102, Trigger 2 102 and Trigger 3 102.

Referring to Figure 3, a flow chart depicting exemplary processes for handling status conflicts based on priority in accordance with one aspect of the present application is provided. Those skilled in the relevant art will appreciate that fewer or more processes can be used. The processes for resolving status conflicts can begin at block 300. At block 302, the unified communication system 100 can receive a trigger event 102. Trigger events 102 can include, but are not limited to, manual status changes by the person, manual status changes by an administrator, integrated calendar events, location based events, network connection based events, time based events and PC activity events. More than one trigger event 102 can be received at a time.

At block 304, the system 100 can determine a priority for the trigger event 102. The priority can be received by the client sending the trigger event 102. The system 100, in some embodiments, can receive information about the client and from that information, the system 100 can determine a priority for that client. A table stored within a database can be used to associate clients with priorities.

At decision block 306, the system 100 can determine whether the new status of the received trigger event 102 can overwrite the old status currently in place. When the trigger event 102 has a lower priority than the previous trigger events 102, at block 308, the trigger event 102 can be rejected and the new status associated with the trigger event 102 is not used. When the priority for the new trigger event 102 is higher, at block 310, the unified communication system 100 would change the user status and affinity. From there, communication services can be modified or kept. The processes can end at block 312.

Continuing with the previous illustration provided above in Figure 2B, when Trigger 4 102 having a priority of seven is received, the system 100 can place Trigger 4 102 at the bottom of the table. An error can be sent back to the client that sent Trigger 4 102. If Trigger 4 102 has a priority of one, however, Trigger 4 102 can be placed at the top of the table and the status can be set accordingly. While Figure 3 compares only two trigger events 102, three or more events 102 can be compared at the same time. Furthermore, the unified communication system 100 can update the trigger events 102 based on other source affinities. When priorities change, the trigger events 102 can also be compared.

Based on the source tagging and source affinity of the trigger events 102, the unified communication system 100 can resolve conflicts. Figure 4 shows a time based affinity example for handling trigger events 102 in accordance with one aspect of the present application. In this example, a trigger event 102 is provided by an automated calendar event to change the user's status to "In A Meeting" through a calendar event listener module to system 100. The status provided by the calendar event listener module can be sent with a high priority. In some embodiments, the priority can be higher than a location or time based trigger event 102, but not a manual trigger event 102. The status can be sent with an expiration time equal to the time for the meeting. A parameter specifying that the status is to become invalid after a period of time can be provided by the calendar event listener module.

In some embodiments, the calendar event listener module can specify a status for the unified communication system 100 to change to after the trigger event 102 expires. When no new status parameter is specified, and after the expiration occurs, the priority of the current status can be lowered more than any other source including the calendar event source that originally set it. This has the effect of invalidating the status as soon as any other trigger event 102 occurs.

Continuing with Figure 4, a trigger event 102 from a location based service can be provided to the unified communication system 100. The location based service can be provided by, but is not limited to, a global positioning system and Bluetooth® systems. The trigger event 102 can set the status of the user to "In The Office." When a comparison is made, however, the system 100 can determine that the current "In A Meeting" status was set with a higher priority and it has not expired. As a result, the status for the user is not changed.

After a period of time passes by, the affinity for "In A Meeting" ends. In some embodiments, for conference calls, the "In A Meeting" status can end when the phone call ends. The trigger event 102 provided by the location based service can then cause a status change for the user. In this example, the unified communication system 100 can change the user's status to "In The Office."

In the previous example, the user's status was considered invalid after the calendar trigger event 102 expired. For other types of events 102, the priority can be lowered or raised as the source providing the event 102 requires. Figure 5 shows a priority lowering example for handling trigger events 102 in accordance with one aspect of the present application. In this example, a trigger event 102 can be provided by a time event module to the unified communication system 100. The user can have a time based setting the user's status to "At Work" starting at 8:00 AM for nine hours.

A trigger event 102 can be provided by location services. The user can have a location or network based trigger event 102 for "At Home" that is determined by their home network or global positioning system coordinates. Situations where the time event module and location based services can provide trigger events 102 include "telecommuting." The user can set the trigger event 102 provided by the time module at a high priority so that when the user is at home between 8:00 AM and 5:00 PM, the location and network connection trigger events 102 do not override it. Once the time-based trigger event 102 expires, the user can remain in the "At Work" status, as the user can be at the office working late, but the network connectivity or location-based sources now have a higher priority so that when the user arrives at home the status is set appropriately. Previously, users would have to disable automated changes or require hardcoded prioritization of manual status override to manage this scenario.

The foregoing description is provided to enable any person skilled in the relevant art to practice the various embodiments described herein. Various modifications to these embodiments will be readily apparent to those skilled in the relevant art, and generic principles defined herein can be applied to other embodiments. Thus, the claims are not intended to be limited to the embodiments shown and described herein, but are to be accorded the full scope consistent with the language of the claims, wherein reference to an element in the singular is not intended to mean "one and only one" unless specifically stated, but rather "one or more." All structural and functional equivalents to the elements of the various embodiments described throughout this disclosure that are known or later come to be known to those of ordinary skill in the relevant art are expressly incorporated herein by reference and intended to be encompassed by the claims. Moreover, nothing disclosed herein is intended to be dedicated to the public regardless of whether such disclosure is explicitly recited in the claims.

## Claims

1. A system comprising:
at least one source configured to provide a trigger event to an integrated communication service;
wherein said integrated communication service is configured to associate a priority and duration to said trigger event received from said at least one source, said integrated communication service further configured to adjust communication services for said duration based on said priority of said trigger event.

2. The system of claim 1, wherein said duration associated with said trigger event is based on at least one of time, connectivity and proximity.

3. The system of claim 1 or claim 2, wherein said at least one source is a user defined source or alternatively wherein said at least one source is a system defined source.

4. The system of any of claims 1 to 3, wherein said communication services comprise at least one of call routing, instant messaging availability, email, and video.

5. The system of any of claims 1 to 4, wherein said at least one source provides said trigger event to said integrated communication service through a wireless network.

6. A unified communication system configured to:
receive two or more trigger events;
establish priorities and durations for said two or more trigger events;
update communication services dependent on a trigger event of said two or more trigger events having a highest priority for said duration of said trigger event or until another trigger event having a higher priority is received.

7. The unified communication system of claim 6, wherein receiving two or more trigger events are from automatic or manual status updates.

8. The unified communication system of claim 6 or claim 7, wherein said durations are based on at least one of time, proximity and network connectivity and optionally wherein said time based durations are introduced through calendar events.

9. The unified communication system of any of claims 6 to 8, wherein establishing said priorities and durations for said two or more trigger events comprises retrieving said priorities and durations from a database within said unified communication system.

10. The unified communication system of any of claims 6 to 9, wherein said duration of said trigger event expiring causes said priority of said trigger event to lower.

11. A method for resolving conflicts within a unified communication system, said method comprising:
receiving a status trigger;
associating a priority and a duration with said status trigger; and
modifying current communication services when said priority of said status trigger is higher than priorities associated with other status triggers for said duration of said status trigger.

12. The method of claim 11, wherein associating said priority with said status trigger comprises retrieving said priority from a client.

13. The method of claim 11 or claim 12, wherein associating said priority with said status trigger comprises matching a client providing said status trigger to a table of priorities stored within said unified communication system.

14. The method of any of claims 11 to 13, further comprising keeping said current communication services when said priority associated with said status trigger is lower than said priorities associated with said other status triggers.

15. The method of any of claims 11 to 14, wherein said duration is based on time and/or wherein said duration is based on a condition and/or wherein said duration is based on a proximity of a client providing said status trigger and/or wherein said duration is based on a network connectivity of a client providing said status trigger.
